# EUROPEAN PATENT APPLICATION

(11) **EP 3 770 424 A1**
(43) Date of publication of application: **27.01.2021**
(21) Application number: 19188052.5
(22) Date of filing: 24.07.2019
(51) Int. Cl.: F03D 17/00

(54) **BLADE INSPECTION DEVICE AND A BLADE CONDITION MONITORING SYSTEM**

(71) Applicant: Siemens Gamesa Renewable Energy A/S, 7330 Brande (DK)
(72) Inventor: Elberling, Jeffrey, Boulder, 80021 (US); Nielsen, Lars Holm, 8766 Nørre Snede (DK)
(74) Representative: Aspacher, Karl-Georg

(57) **Abstract**

The invention describes an automated turbine blade monitoring system that delivers on-demand photographs to avoid extensive labor costs from onsite inspections, which increases the frequency of blade inspections and ultimately extending the life of wind turbine blades. Blade condition data can be collected remotely without sending technicians to the turbine, improving mean time between visits to the unit. An associated method, computer systems, and computer program products are also provided.

## Description

The invention relates to a method and a device for automated monitoring of rotor blades and more specifically to embodiments of a method and device for monitoring a condition of rotor blade surfaces of a wind turbine.

Wind turbine blades take damage from many different sources. Inspecting the condition of the blades as much as possible can detect blade damage at earlier points in time and reduces a chance that the damage propagates through the rotor blade. Currently, blade inspections are expensive because at least one technician must be onsite at the wind turbine farm to complete the inspection.

It is the object of the present invention to improve the inspection of a blade, especially the known inspection devices and methods.

This object is achieved by a blade inspection device according to claim 1, a method according to claim 8 and a method according to claim 12.

An aspect of the invention relates to a blade inspection device (that could also be part of a, or designated as a "blade condition monitoring system") comprising: a housing configured to be attached to a tower of a wind turbine, a camera disposed within the housing, the camera configured to capture digital images of a plurality of rotor blades of the wind turbine at various positions for monitoring a condition of the plurality of rotor blades, and a camera holder holding the camera within the housing, the camera holder constructed to allow movement of the camera in at least two axes.

The housing protects the camera from environmental influences such as wind rain or dust and preferably includes a frame and a number of side walls, a bottom wall, and a top wall attached to the frame.

The camera could be a high-resolution camera, e.g. a one pixel/mm 80 m distance camera having a 1-inch sensor size that ensures the field of view captures an entire rotor blade. For easy handling, the camera should have automatic focus and remote capture abilities. Inside the housing, the camera is preferably vertically oriented to face upwards and capture digital images of the plurality of rotor blades. However, depending on the predefined measuring position of the device, the camera may be otherwise oriented.

The camera holder should hold the camera so that the camera can be manipulated to encompass all surfaces of the rotor blades during a photographic operation of the device. The camera holder is preferably a pan-tilt stand with two degrees of freedom, e.g. 0.88° resolution, 360° pan, and 180° tilt. The camera holder can comprise motors (e.g. servo motors) or other movement means to change the position/orientation of the camera and a control unit for controlling the motors. For example, a "raspberry pi" or an ARDUINO device could be used as control unit.

Another aspect relates to a method of monitoring rotor blades of a wind turbine, comprising the following steps:
- Rotating a rotor of the wind turbine so that each surface of the rotor blades is temporarily in the field of view of a camera of a condition monitoring system (e.g. a blade inspection device as described above) attached to a tower of the wind turbine.
- Photographing each surface of the rotor blades using the camera of the condition monitoring system.

In praxis, the method could be performed by moving the blades to different positions. Here, the wind turbine could be part of the condition monitoring system and be controlled in a special way. A special aspect relates to a method for monitoring rotor blades of a wind turbine, the method comprising the following steps:
- Receiving a command to initiate digital imaging of a plurality of rotor blades of the wind turbine.
- Moving the plurality of rotor blades to a first position, wherein in the first position, a first rotor blade is in a field of view of a camera of the condition monitoring system.
- Capturing a digital image of a first surface of the first rotor blade at a first pitch angle and a second surface of the first rotor blade at a second pitch angle.
- In response to capturing the digital image of the first surface and the second surface of the first rotor blade, moving the plurality of rotor blades to a second position so that a second rotor blade is in the field of view of the camera.
- Capturing a digital image of a first surface of the second rotor blade at a first pitch angle and a second surface of the second rotor blade at a second pitch angle.

For example, the camera holder is programmed to or instructed to move (e.g. pan and/or tilt) to encompass the rotor blade surfaces. In an exemplary embodiment, the rotor blades are positioned, the rotor is stopped for a while, and in the stopped position, photographs are taken. The blades are then pitched, further photographs are taken, and the method continues like this until all surface areas of the inspected blade have been scanned. Then, the rotor is rotated, and the same steps are repeated.

Other aspects relate to a computer system and a computer program product.

The steps of the method according to the invention can be completely or partially realized as software functions running on a processor of a computing device. A realization largely in the form of software modules can have the advantage that an existing wind turbine controlling system can be updated, with relatively little effort, to install and run these units of the present application. A such prepared wind turbine together with an inspection device according to the invention would be a preferred a blade monitoring system. The method of the invention is also achieved by a computer program product with a computer program that is directly loadable into the memory of an inspection device or a wind turbine controlling system, and which comprises program units to perform the steps of the inventive method when the program is executed by the inspection device or the wind turbine controlling system. In addition to the computer program, such a computer program product can also comprise further parts such as documentation and/or additional components, also hardware components such as a hardware key (dongle etc.) to facilitate access to the software.

A computer readable medium such as a memory stick, a hard-disk or other transportable or permanently-installed carrier can serve to transport and/or to store the executable parts of the computer program product so that these can be read from a processor unit of an inspection device or a wind turbine controlling system. A processor unit can comprise one or more microprocessors or their equivalents.

Particularly advantageous embodiments and features of the invention are given by the dependent claims, as revealed in the following description. Features of different claim categories may be combined as appropriate to give further embodiments not described herein.

In an exemplary embodiment, at least a top surface of the housing is comprised of a transparent material, and the entire housing is waterproof, what is advantageous for both onshore and offshore wind turbine applications. The housing can be attached (or at least attachable) to a lower section of the tower. The side walls and bottom walls of the housing could e.g. be comprised of latex-painted PVC paneling with gaskets and insulation to regulate an internal temperature and address weathering of the blade inspection device. The top wall or roof of the housing is preferably transparent, being formed by a high-impact resistance polycarbonate. A polycarbonate roof of the housing is preferably lightweight and low-cost, providing good visual quality; blur and reflections could e.g. be avoided in the photos due to such polycarbonate roof. In some embodiments, one or more of the side walls and the bottom wall could also be made of polycarbonate. The frame can include T-slot profiles for various attachments to the housing. In an exemplary embodiment, the frame is comprised of 80/20 extruded aluminum. It is preferred that the housing is designed to withstand an impact from approximately 1000 Newtons or more without causing damage that can interfere with picture quality and can have a lifetime of 25 years or more with very little maintenance required. The housing is preferably designed to achieve an Ingress Protection Rating of IP55.

Preferably, the housing comprises at least one transparent side-part (e.g. roof, floor or wall comprises transparent polycarbonate material), wherein the camera is positioned such that it can take images through this transparent side-part. It is further preferred that the housing comprises protective elements covering the transparent side-part from environmental influences, e.g. wind or rain, so that dirt or water are kept off the transparent side-part of the housing. For taking images, these protective elements should be removed. It is preferred that the housing comprises moving means designed to move (e.g. slide or flip) the protecting elements in order to uncover (and cover) the transparent side-part of the housing automatically. Thus articulating doors can be realized which open upon inspection startup and close upon completion to protect the transparent side-part from debris, rain, snow or hail).

Preferably, the housing includes attachment means, wherein an attachment means is especially located on at least one side wall of the housing for mounting the housing to the tower of the wind turbine. The attachments means can be magnets to semi-permanently attach the housing to the wind turbine tower. Tape can be placed on the end of the magnets to prevent damage to the surface of the wind turbine tower. In an exemplary embodiment, magnets are placed on at least one side wall for attaching the housing to the tower. Thus, it is preferred that the (especially waterproof) housing is attachable (or being attached) to a surface of the tower of a wind turbine with magnets, preferably wherein the (especially waterproof) housing includes a metal frame and a transparent roof surface. It is preferred that the magnets are designed as "pole-switching" magnets or a magnetic base which can be turned on and off for easier mounting and dismounting. A magnetic base (pole switching magnet) is a magnetic fixture based on a magnet that can effectively be turned "on" and "off" by turning a magnetic switch located between two permanent magnets.

In a preferred embodiment, the blade inspection device comprises a thermostat for controlling a temperature of an environment inside the housing and/or a dehumidifier for controlling a moisture level of the environment inside the housing, and/or a fan for circulating air within the environment inside the housing (to keep electronics within the housing cool when the external temperature gets hot). The thermostat is preferably a silicone rubber enclosure heater (e.g. 300W, 120V) that maintains a temperature within the housing above 32°F.

In a preferred embodiment, blade inspection device comprises a microcomputer coupled to the camera, the microcomputer including an integrated circuit having an embedded processor, and preferably additionally a wireless network interface, and/or a power source, and/or a memory system. The microcomputer preferably communicates over a network with a remote computer that controls the wind turbine, wherein especially the microcomputer wirelessly communicates over a network with a remote computer that controls the wind turbine, and/or a SCADA system (SCADA: Supervisory Control and Data Acquisition). For example, the camera is linked via ethernet to the WTG (Wind Turbine Generator), e.g. via a Hirschmann switch, and the networks can e.g. connect via a cRSP (Common Remote Service Platform). Such connection will allow remote users to remotely connect to the blade inspection device (the condition monitoring system, respectively) via static IP address and command the inspection process to begin. A custom WTG software script can be utilized to request the turbine perform the necessary rotor and blade pitch positioning automatically during the inspection process and link the WTG software to the camera software to exchange commands. Further, the blade inspection device (the condition monitoring system, respectively) may include two computers or microcomputers, such as a "raspberry pi" and ARDUINO controller. The two computers communicate to synchronize camera movement with photo capture.

A preferred blade monitoring system includes a wind turbine (having a computing system), a SCADA (having a computing system), an image database, and the computing system (e.g. a microcomputer) of the blade inspection device (the blade condition monitoring system) that are communicatively coupled to each other over a network. For instance, information/data is preferably transmitted to and/or received from the wind turbine, the SCADA, and the image database over a network. In an exemplary embodiment, the network is a cloud computing network. Further embodiments of network refer to a group of two or more computer systems linked together. Network includes any type of computer network known by individuals skilled in the art. Examples of network include a LAN, WAN, campus area networks (CAN), home area networks (HAN), metropolitan area networks (MAN), an enterprise network, cloud computing network (either physical or virtual) e.g. the Internet, a cellular communication network such as GSM or CDMA network or a mobile communications data network. In one embodiment, the architecture of the network is a peer-to-peer, wherein in another embodiment, the network is organized as a client/server architecture. The wind turbine and the SCADA system may have similar computer architecture.

The image database is preferably a database or another storage device that includes a plurality of image files of rotor blades, damages rotor blades, and the like. The computing system of the blade inspection device (the blade condition monitoring system) is preferably equipped with a memory device which stores various data and/or information and/or code, and a processor for implementing the tasks. One or more software applications are loaded in the memory device of the computing system of the blade inspection device (the blade condition monitoring system). The applications can be an interface, an application, a program, a module, or a combination of modules.

It is preferred to establish an automated data transfer for the data of the digital images from the blade inspection device (e.g. from a data memory of the device) to an external database via a network as mentioned above.
It is preferred that the blade monitoring system comprises an interface for a direct data communication between the controller of the blade inspection device and a wind turbine controller. It is further preferred that the interface is designed for a two-way communication to automatically command the wind turbine to shut the turbine down for the inspection protocol, and subsequently re-start the turbine upon completion.

The automated method of monitoring damage to rotor blades can be requested remotely from the wind turbine to the blade inspection device (the blade condition monitoring system), from the blade inspection device (the blade condition monitoring system) to the wind turbine, or via SCADA system, for example, over network.

In a preferred embodiment, the camera of the blade inspection is capable of panning across at least 106 degrees of viewing angle to view the plurality of rotor blades.

The camera is preferably vertically oriented within the housing to face upwards and capture digital images of the plurality of rotor blades.

In a preferred embodiment, the blade inspection device comprises an attachment means located on at least one side wall of the housing for mounting the housing to the tower of the wind turbine. The attachment means can be magnets. The housing is preferably attachable (or attached) to a lower section of the tower.

In a preferred embodiment, blade damage is automatically identified and categorized based on images captured by the camera of the condition monitoring system (the blade inspection device). The images captured by the camera are compared with a plurality of images stored on a central database. Automatically identify and categorizing damages preferably includes comparing the images captured by the camera with a plurality of images stored on a central database. For instance, automatic analysis of the blade surface can be made by comparison of the taken photos to a library of predefined perfect blades. Regions of the blade, such as the trailing edge can be compared to other damaged trailing edges in the photos for identifying rotor blade damage to certain regions of the blade. The digital image files are transferred and automatically integrated into a database, such as HERMES blade database, which provides blade inspection database images and artificial intelligence to automatically identify and categories damages. Software may also be customizable with respect to inspection frequency and target(s) on blade. For example, an end user could choose to inspect any/all turbines every day/month/year according to an operating strategy, and also focus inspections on certain areas of blades to monitor known damages over higher frequency periods to maintain operations until repairs can be made.

In a preferred embodiment, the condition monitoring system includes a weatherproof housing protecting the camera, the waterproof housing being attached to a surface of the tower with magnets. The waterproof housing includes a metal frame and a transparent roof surface.

In a preferred embodiment, photographing each surface of the rotor blades includes capturing digital images of a pressure side, a suction side, a leading edge, and a trailing edge of the rotor blades.

Preferably, photographing each surface of the rotor blades also includes manipulating the camera in different positions to alter the field of view of the camera to encompass a specific surface of the rotor blades.

In a preferred embodiment, rotating the rotor of the wind turbine so that each surface of the rotor blades is temporarily in the field of view of the camera includes pitching each rotor blade at (at least) two different pitch angles while the rotor is in a stopped position.

In praxis, it is preferred that the method further comprises the steps transmitting, by the processor, the first digital image and the second digital image to a remote computer for analysis and comparison with a plurality of digital images in a central database.

It is further preferred that the method further comprises the steps:
- in response to capturing the digital image of the first surface and the second surface of the second rotor blade, moving the plurality of rotor blades to a third position so that a third rotor blade is in the field of view of the camera; and
- capturing a digital image of a first surface of the third rotor blade at a first pitch angle and a second surface of the third rotor blade at a second pitch angle.

A preferred aspect relates to a method for monitoring rotor blades of a wind turbine, the method comprising: receiving, by a processor of a condition monitoring system, a command to initiate digital imaging of a plurality of rotor blades of the wind turbine, instructing, by the processor, the wind turbine to move the plurality of rotor blades to a first position, wherein in the first position, a first rotor blade is in a field of view of a camera of the condition monitoring system, capturing, by the processor, a digital image of a first surface of the first rotor blade at a first pitch angle and a second surface of the first rotor blade at a second pitch angle, using the camera of the condition monitoring system, in response to capturing the digital image of the first surface and the second surface of the first rotor blade, instructing, by the processor, the wind turbine to move the plurality of rotor blades to a second position so that a second rotor blade is in the field of view of the camera, and capturing, by the processor, a digital image of a first surface of the second rotor blade at a first pitch angle and a second surface of the second rotor blade at a second pitch angle, using the camera of the condition monitoring system.

For a better understanding, in this preferred aspect the said processor may here be localized in a blade inspection device according to the invention, that can be regarded as (at least a part of) the condition monitoring system being controlled by this processor.

In a preferred embodiment, the first digital image and the second digital image are transmitted to a remote computer for analysis and comparison with a plurality of digital images in a central database.

In a preferred embodiment, in response to capturing the digital image of the first surface and the second surface of the second rotor blade, the processor instructs the wind turbine to move the plurality of rotor blades to a third position so that a third rotor blade is in the field of view of the camera, and captures a digital image of a first surface of the third rotor blade at a first pitch angle and a second surface of the third rotor blade at a second pitch angle, using the camera of the condition monitoring system.

A preferred aspect relates to a method for monitoring rotor blades of a wind turbine, the method comprising: receiving, by a processor of a computing system, a command to initiate digital imaging of a plurality of rotor blades of the wind turbine, moving, by the processor, the plurality of rotor blades to a first position, wherein in the first position, a first rotor blade is in a field of view of a camera of the condition monitoring system, instructing, by the processor, a condition monitoring system to capture a digital image of a first surface of the first rotor blade at a first pitch angle and a second surface of the first rotor blade at a second pitch angle, in response to the digital image of the first surface and the second surface of the first rotor blade being captured, moving, by the processor, the plurality of rotor blades to a second position so that a second rotor blade is in the field of view of the camera, and instructing, by the processor, the condition monitoring system to capture a digital image of a first surface of the second rotor blade at a first pitch angle and a second surface of the second rotor blade at a second pitch angle.

For a better understanding, in this preferred aspect the said processor may here be localized in a wind turbine or a special facility, wherein the condition monitoring system can be regarded as a blade inspection device according to the invention that can be controlled by this processor.

In a preferred embodiment, the first digital image and the second digital image are transmitted to a remote computer for analysis and comparison with a plurality of digital images in a central database.

In a preferred embodiment, in response to the digital image of the first surface and the second surface of the second rotor blade being captured, the processor moves the plurality of rotor blades to a third position so that a third rotor blade is in the field of view of the camera, and instructs the condition monitoring system to capture a digital image of a first surface of the third rotor blade at a first pitch angle and a second surface of the third rotor blade at a second pitch angle.

One preferred example sequence for automatically monitoring a condition of rotor blades comprises the following steps:
1. Send a "blade inspection command" to the wind turbine. This command starts the inspection of the blades.
2. The wind turbine pitches a number of blades (preferably all, e.g. three, blades) to their stop position. The brakes are especially not activated yet.
3. The wind turbine yaws to a specified yaw position and preferably holds this yaw position throughout the rest of the sequence.
4. The wind turbine activates its brakes to stop at a predefined position. This position is preferably a "first rotor azimuth position" where the rotor is preferably positioned such that two blades are pointing downward, and one blade straight up. For example, for a rotor with three blades A, B and C, blade A is down/right, blade C is down/left, and blade B is pointing up. It should be noted here and for the description of the further steps that for other applications, other positions of the rotor could be appropriate, e.g. one blade pointing straight downwards.
5. A number of blades (especially one single blade e.g. blade A) is pitched to a predefined first position (e.g. 85 degrees, stop position). A number of pitched blades is photographed (e.g. blade A), wherein the suction side is especially photographed.
6. A number of blades (especially one single blade e.g. blade A) is pitched to a predefined second position (e.g. to 0 degrees, run position). A number of pitched blades is photographed (e.g. blade A), wherein the leading edge is especially photographed.
7. (Optional) A number of blades (especially one single blade e.g. blade A) is pitched back to a predefined position, preferably the first position (e.g. blade A is pitched back to 85 degrees).
8. A number of blades (especially one other single blade as pitched before, e.g. blade C) is pitched to a predefined first position (e.g. 85 degrees, stop position). A number of pitched blades is photographed (e.g. blade C), wherein the pressure side is especially photographed.
9. A number of blades (especially said single blade e.g. blade C) is pitched to a predefined second position (e.g. to 0 degrees, run position). A number of pitched blades is photographed (e.g. blade C), wherein the trailing edge is especially photographed.
10. (Optional) A number of blades (especially said single blade e.g. blade C) is pitched back to a predefined position, preferably the first position (e.g. blade C is pitched back to 85 degrees).
11. (Optional) The brake of the rotor is released and the rotor is positioned to a "second rotor azimuth position", differing from the first rotor azimuth position, where the rotor is preferably positioned such that two blades are pointing downward, and one blade (different to the blade in step 4) straight up. For example, for a rotor with three blades A, B and C, blade B is down/right, blade A is down/left, and blade C is pointing up. It should be noted that for other applications, blade C could also point straight downwards.
   Now steps 5 to 10 are preferably repeated with different blades. In the following steps, the configuration with said three blades A, B, C is described with C pointing up.
12. (Optional) Blade B is pitched to a predefined first position (e.g. 85 degrees, stop position). The pitched blade (here blade B) is photographed, wherein the suction side is especially photographed.
13. (Optional) Blade B is pitched to a predefined second position (e.g. 0 degrees, run position). The pitched blade (i.e. blade B) is photographed, wherein the leading edge is especially photographed.
14. (Optional) Blade B is pitched back to a predefined position, preferably to the predefined first position (e.g. 85 degrees).
15. (Optional) Blade A is pitched to a predefined first position (e.g. 85 degrees, stop position). The pitched blade (i.e. blade A) is photographed, wherein the pressure side is especially photographed.
16. (Optional) Blade A is pitched to a predefined second position (e.g. 0 degrees, run position). The pitched blade (here blade B) is photographed, wherein the trailing edge is especially photographed.
17. (Optional) Blade A is pitched back to a predefined position, preferably to the predefined first position (e.g. 85 degrees).
18. (Optional) The brake of the rotor is released and the rotor is positioned to a "third rotor azimuth position", differing from the first and the second rotor azimuth position, where the rotor is preferably positioned such that two blades are pointing downward, and one blade (different to the blade in step 4 and 11) straight up. For example, for a rotor with three blades A, B and C, blade C is down/right, blade B is down/left, and blade A is pointing up. It should be noted that for other applications, blade A could also point straight downwards.
   Now steps 5 to 10 are repeated with different blades. In the following steps, the configuration with said three blades A, B, C is described with A pointing up.
19. (Optional) Blade C is pitched to a predefined first position (e.g. 85 degrees, stop position). The pitched blade (i.e. blade C) is photographed, wherein the suction side is especially photographed.
20. (Optional) Blade C is pitched to a predefined second position (e.g. 0 degrees, run position). The pitched blade (i.e. blade C) is photographed, wherein the leading edge is especially photographed.
21. (Optional) Blade C is pitched back to a predefined position, preferably to the predefined first position (e.g. 85 degrees).
22. (Optional) Blade B is pitched to a predefined first position (e.g. 85 degrees, stop position). The pitched blade (i.e. blade B) is photographed, wherein the pressure side is especially photographed.
23. (Optional) Blade B is pitched to a predefined second position (e.g. 0 degrees, run position). The pitched blade (i.e. blade B) is photographed, wherein the trailing edge is especially photographed.
24. (Optional) Blade B is pitched back to a predefined position, preferably to the predefined first position (e.g. 85 degrees).
25. The sequence is complete, the wind turbine resumes to normal operation.

The computer system with a processor, a memory device coupled to the processor; and a computer readable storage device coupled to the processor, may be designed such that the storage device contains program code executable by the processor via the memory device to implement one of the above described preferred aspects of the method.

Also a computer program product is preferred that comprises a computer readable hardware storage device storing a computer readable program code, the computer readable program code comprising an algorithm that when executed by a computer processor of a computing system implements a method according to one of the above described preferred aspects of the method.

The blade inspections can be on-demand via a software algorithm, with a successful observation of a defect e.g. as small as 10 centimeters or smaller.

It is preferred to monitor the camera-vision to ensure the device placement and turbine yaw orientation are ∼100% aligned. This is preferably achieved automatically by a vertical centering method.

It is preferred that the blade inspection device or the condition monitoring system is designed for a camera-vision-based tip identification. The current methodology uses static inputs such as tower height, blade length, and distance between tower and blade tip to orient the camera to focus on the tip end of the blade. Concerning the invention, it is preferred to apply markers on at least one blade or use existing markers on a blade (such as a circular lightning receptor). This marker can be used to determinate where the blade tip is located. This method would allow an accurate tip detection regardless of tower height, blade type, etc.

The foregoing and other features of construction and operation will be more readily understood and fully appreciated from the following detailed disclosure, taken in conjunction with accompanying drawings.

Some of the embodiments will be described in detail, with reference to the following figures, wherein like designations denote like members, wherein:
FIG. 1 depicts a wind turbine having a condition monitoring system, in accordance with embodiments of the present invention;
FIG. 2 depicts a rotor blade of a wind turbine;
FIG. 3 depicts a perspective view of a condition monitoring system, in accordance with embodiments of the present invention;
FIG. 4 depicts a side view of the condition monitoring system, in accordance with embodiments of the present invention;
FIG. 5 depicts an exploded view of the condition monitoring system, in accordance with embodiments of the present invention;
FIG. 6 depicts the condition monitoring system mounted to the wind turbine, in accordance with embodiments of the present invention;
FIG. 7 depicts the condition monitoring system mounted to the wind turbine, in accordance with embodiments of the present invention;
FIG. 8 depicts, in accordance with embodiments of the present invention;
FIG. 9 depicts a method for monitoring rotor blades of a wind turbine, in accordance with embodiments of the present invention;
FIG. 10 depicts a block diagram of an automated blade monitoring system, in accordance with embodiments of the present invention.

A detailed description of the hereinafter described embodiments of the disclosed apparatus and method are presented herein by way of exemplification and not limitation with reference to the Figures. Although certain embodiments are shown and described in detail, it should be understood that various changes and modifications may be made without departing from the scope of the appended claims. The scope of the present disclosure will in no way be limited to the number of constituting components, the materials thereof, the shapes thereof, the relative arrangement thereof, etc., and are disclosed simply as an example of embodiments of the present disclosure.

As a preface to the detailed description, it should be noted that, as used in this specification and the appended claims, the singular forms "a", "an" and "the" include plural referents and "comprising" does not exclude other steps or elements, unless the context clearly dictates otherwise.

The mention of a "unit" or a "device" does not preclude the use of more than one unit or device. Objects in the diagrams are not necessarily drawn to scale.

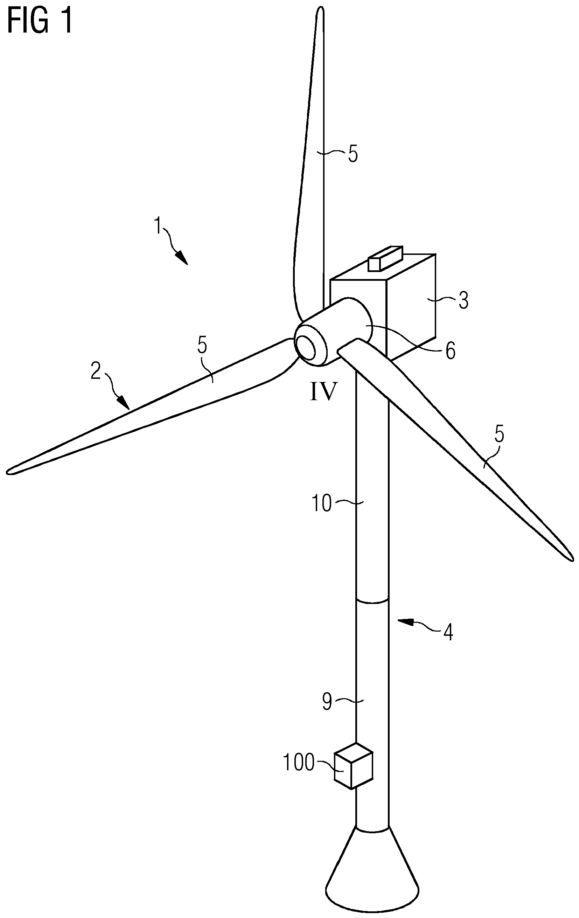

Figure 1 depicts a wind turbine 1 having a condition monitoring system, in accordance with embodiments of the present invention. The wind turbine 1 includes one or more rotor blades 5 (on a rotor 2) that connect to a hub 6 of the wind turbine 1. The hub 6 is connected to a nacelle 3 that is atop a wind turbine tower 4. The wind turbine tower 4 may be constructed in multiple sections, such as tower section 9 and tower section 10.

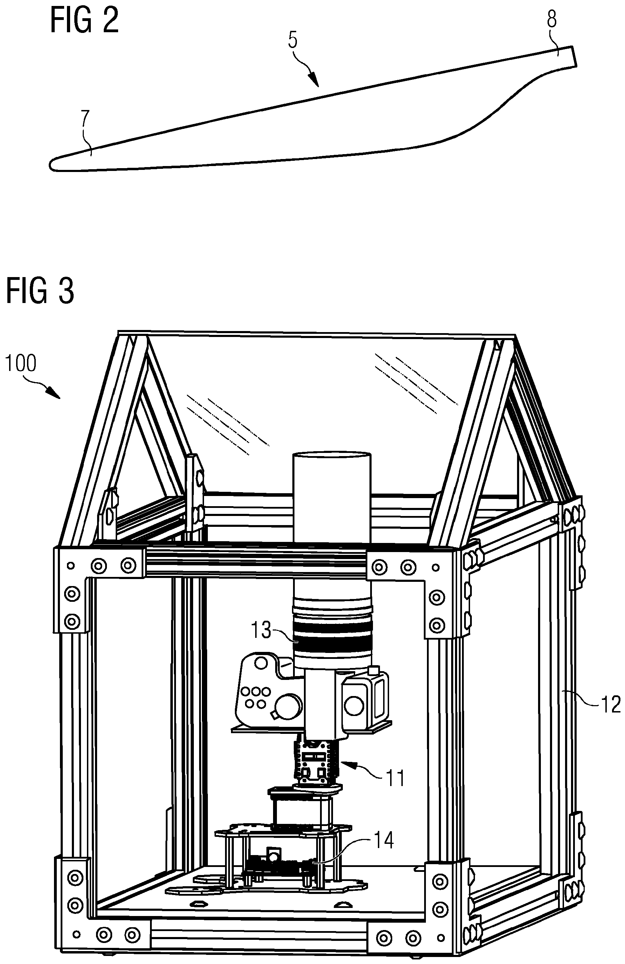

Figure 2 depicts a rotor blade 5 of the wind turbine 1. The rotor blade 5 includes a tip end 7 and a root end 8. Each rotor blade 5 has a leading edge, a trailing edge, a suction side, and a pressure side. Wind turbine blades are known to take damage from many sources and are inspected for damage at regular intervals. Conventional inspection methods include ground-based or drone-mounted cameras, which externally inspect the blades. Both ground-based inspection methods and drone-mounted camera inspection methods require a technician or sometimes two technicians to manually shut down the wind turbine and operate the camera equipment. Automating the inspection of the rotor blades removes the need to physically send technicians to the wind turbine to execute the task, especially if the wind turbine is in an offshore environment.

FIG. 3 depicts a perspective view of a condition monitoring system, in accordance with embodiments of the present invention. Automating the inspection/monitoring of the rotor blades is accomplished with a condition monitoring system (CMS) 100 that is attached to the wind turbine 1, as shown schematically in Figure 1. The CMS 100 can be either permanently or temporarily mounted to the wind turbine tower 4, eliminating the need to send a technician to the turbine to take photographs of the rotor blades 5. When lighting and weather conditions are adequate, the wind turbine 1 can remotely position itself into a configuration to have its blades photographed by the CMS 100.

The CMS 100 comprises a pan/tilt/yaw head 11 and a weather-proofed housing 12. The inspection can be requested remotely from the turbine 1 to the CMS 100, from the CMS 100 to the turbine 1, or via a Supervisory Control and Data Acquisition (SCADA) system. The contents of the housing 12 (e.g. camera 13, electronics, etc.) are designed to operate in any weather condition, using a dehumidifier / heater to accommodate extreme conditions. When in operation, the CMS 100 can pan across at least 106 degrees of viewing angle to view both blades when in "reverse rabbit ear" position (i.e. 1 blade pointed straight up, 2 blades pointed down/right and down/left).

Accordingly, the CMS 100 is an automated turbine blade monitoring system that delivers on-demand photographs to avoid extensive labor costs from onsite inspections, which increases the frequency of blade inspections and ultimately extending the life of wind turbine blades. Blade condition data can be collected remotely without sending technicians to the turbine, improving mean time between visits to the unit. Depending on data requirements, data capture intervals can be customized (e.g. weekly, monthly, annually, etc.) or performed an ad-hoc basis. Further, the CMS 100 can be left mounted on the turbine in any weather condition for remotely-requested blade inspections. Improved data collection frequency and reduced cost of data collection is another advantage of the CMS 100. In an alternative embodiment to CMS 100, fully autonomous drones flying beyond a visual line of sight or permanently deployed at each wind turbine with remote data connection to wind turbine can be used to automatically monitor blade conditions.

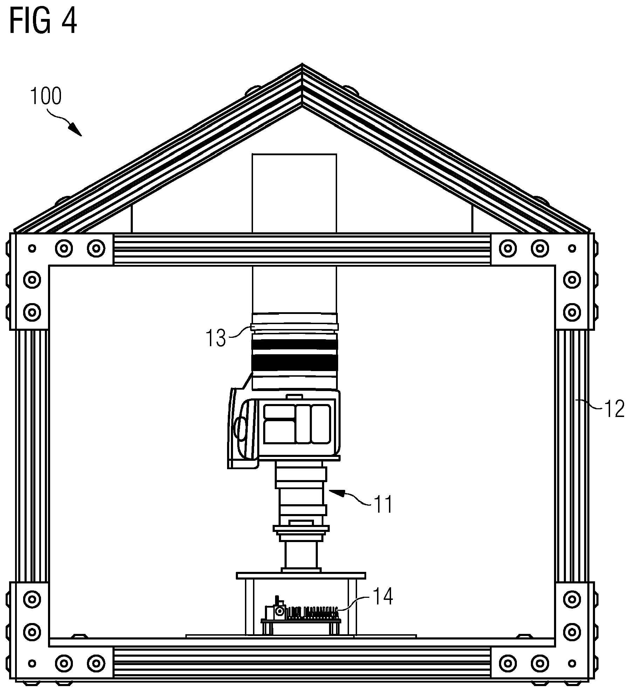

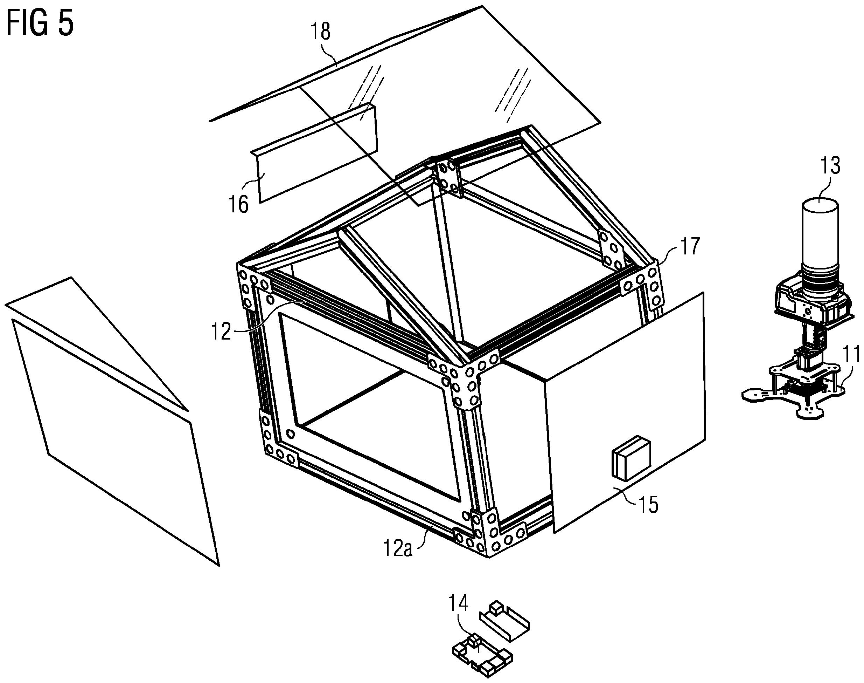

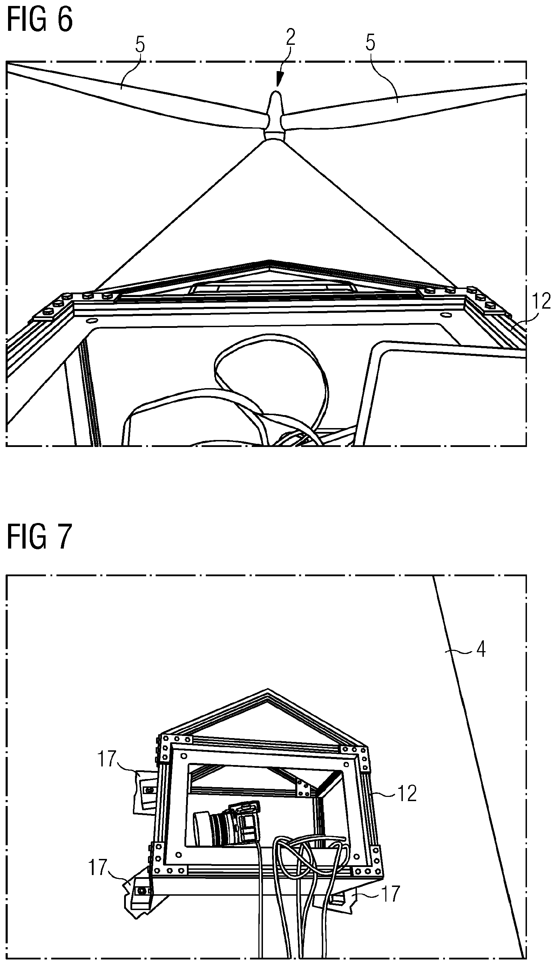

Figures 3, 4 and 5 depict a perspective view, a side view, and an exploded view, respectively, of an embodiment of the CMS 100. CMS 100 includes a housing 12 configured to be attached to a tower of a wind turbine. The housing 12 includes a frame 12a and a number of side walls, a bottom wall, and a top wall attached to the frame 12a so that the entire housing 12 is waterproof. The side walls and bottom walls are comprised of latex-painted PVC paneling with gaskets and insulation to regulate an internal temperature and address weathering of the CMS 100. They are designed to decrease water build-up and provide a lower incident angle for the camera. The top wall or roof of the housing 12 is transparent, being formed by a high-impact resistance polycarbonate 18. The polycarbonate 18 roof of the housing 12 is lightweight and low-cost, providing good visual quality; blur and reflections are avoided in the photos due to the polycarbonate 18 roof. In some embodiments, one or more of the side walls and the bottom wall are also made of polycarbonate 18. The frame 12a can include T-slot profiles for various attachments to the housing 12. In an exemplary embodiment, the frame 12a is comprised of 80/20 extruded aluminum, and preferably an "off-the-shelf" product to minimize manufacturing tome and overall costs. Moreover, the housing 12 includes attachment means an attachment means located on at least one side wall of the housing 12 for mounting the housing 12 to the tower of the wind turbine 1. The attachments means can be magnets to semi-permanently attach the housing 12 to the wind turbine tower. Tape can be placed on the end of the magnets to prevent damage to the surface of the wind turbine tower. In an exemplary embodiment, magnets are placed on at least one side wall for attaching the housing 12 to the tower. Figures 6 to 8 depict the CMS 100 being attached to the wind turbine tower.

Furthermore, the CMS 100 includes a camera 13 disposed within the housing 12. The camera 13 is configured to capture digital images of a plurality of rotor blades 5 of the wind turbine 1 at various positions for monitoring a condition of the plurality of rotor blades 5. In an exemplary embodiment, the camera 13 is a high-resolution, 1 pixel/mm 80 m distance camera 13 having a 1-inch sensor size that ensures the field of view captures an entire rotor blade 5. The camera 13 has automatic focus and remote capture abilities and is capable of panning across at least 106 degrees of viewing angle to view the plurality of rotor blades 5. Inside the housing 12, the camera 13 is vertically oriented to face upwards and capture digital images of the plurality of rotor blades 5. Moreover, the CMS 100 includes a camera holder 11 holding the camera 13 within the housing 12. The camera holder 11 is constructed to allow movement of the camera 13 in at least two axes, so that the camera 13 can be manipulated to encompass all surfaces of the rotor blades 5 during a photographic operation of the CMS 100. The camera holder 11 may be a pan-tilt stand with two degrees of freedom, 0.88° resolution, 360° pan, and 180° tilt. The camera holder 11 can be programmed, such as through ARDUINO IDE compatible with ARDUINO boards. Further, the camera holder 11 includes one or more servo motors with high stall torque to hold the camera 13 steady.

The CMS 100 also includes a thermostat 16 for controlling a temperature of an environment inside the housing 12. The thermostat 16 is a silicone rubber enclosure heater (e.g. 300W, 120V) that maintains a temperature within the housing 12 above 32°F. A dehumidifier is also included for controlling a moisture level of the environment inside the housing 12. A fan 15 is used to circulate air within the environment inside the housing 12 to keep electronics within the housing 12 cool when the external temperature gets hot (e.g. 100°F).

Additionally, the CMS 100 includes a microcomputer 14 coupled to the camera 13. The microcomputer 14 includes at least an integrated circuit having an embedded processor, a wireless network interface, a power source, and a memory system. The microcomputer 14 wirelessly communicates over a network with a remote computer that controls the wind turbine, and/or a SCADA system. For example, the camera 13 is linked via ethernet to the WTG via the Hirschmann switch, and the networks can connect via a cRSP (Common Remote Service Platform). This connection will allow remote users to remotely connect to the CMS 100 via static IP address and command the inspection process to begin. A custom WTG SW script can be utilized to request the turbine perform the necessary rotor and blade pitch positioning automatically during the inspection process and link the WTG SW to the camera software to exchange commands. Further, the CMS 100 may include two computers or microcomputers 14, such as a "raspberry pi" and ARDUINO controller. The two computers communicate to synchronize camera movement with photo capture.

Embodiments of the CMS 100 used to automate monitoring of rotor blades 5 can be competitive with cost of third-party inspection companies. The blade inspections can be on-demand via a software algorithm, with a successful observation of a defect as small as 10 centimeters or smaller. The housing 12 of the CMS 100 can withstand an impact from approximately 1000 Newtons or more without causing damage that can interfere with picture quality and can have a lifetime of 25 years or more with very little maintenance required. The housing 12 is waterproof for both onshore and offshore wind turbine applications and achieves an Ingress Protection Rating of IP55.

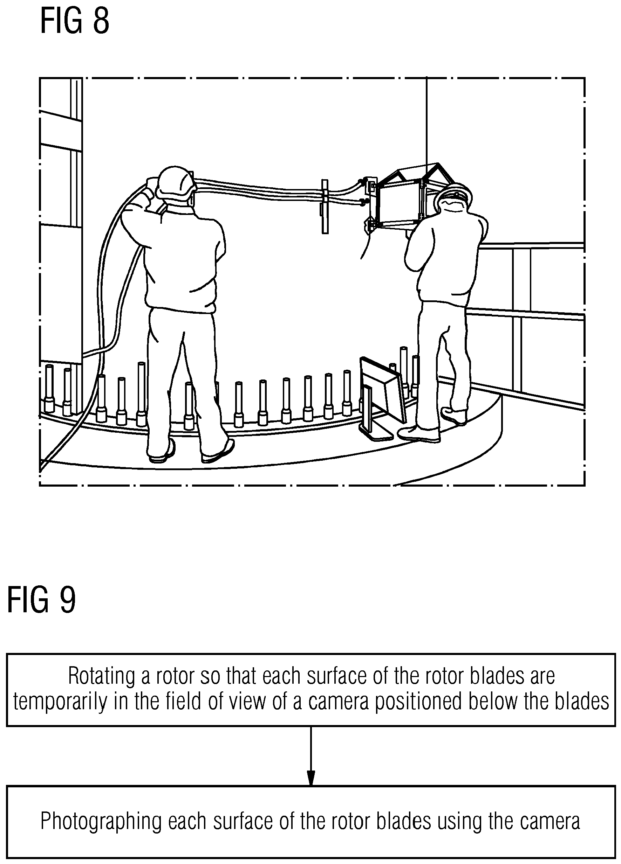

Figure 9 depicts a method for monitoring rotor blades 5 of a wind turbine 1, in accordance with embodiments of the present invention. The method includes the step of rotating a rotor of the wind turbine so that each surface of the rotor blades is temporarily in the field of view of a camera of a condition monitoring system attached to a tower of the wind turbine. Rotating the rotor of the wind turbine so that each surface of the rotor blades is temporarily in the field of view of the camera includes pitching each rotor blade at at least two different pitch angles while the rotor is in a stopped position. The method also includes the step of photographing each surface of the rotor blades using the camera of the condition monitoring system. Photographing each surface of the rotor blades includes capturing digital images of a pressure side, a suction side, a leading edge, and a trailing edge of the rotor blades. In addition, photographing each surface of the rotor blades includes manipulating the camera in different positions to alter the field of view of the camera to encompass a specific surface of the rotor blades. For example, the camera holder of the CMS 100 is programmed to or instructed to move (e.g. pan and/or tilt) to encompass the rotor blade surfaces. In an exemplary embodiment, the rotor blades are positioned, the rotor is stopped for a while, and in the stopped position, photographs are taken. The blades are then pitched, further photographs are taken, and the method continue like this until all surface areas of the inspected blade have been scanned. Then, the rotor is rotated, and the same steps are repeated.

The method for monitoring rotor blades also includes automatically identifying and categorizing damages to the rotor blades based on images captured by the camera of the condition monitoring system. Automatically identify and categorizing damages includes comparing the images captured by the camera with a plurality of images stored on a central database. For instance, automatic analysis of the blade surface can be made by comparison of the taken photos to a library of predefined perfect blades. Regions of the blade, such as the trailing edge can be compared to other damaged trailing edges in the photos for identifying rotor blade damage to certain regions of the blade. The digital image files are transferred and automatically integrates into a database, such as HERMES blade database, which provides blade inspection database images and artificial intelligence to automatically identify and categories damages. Software may also be customizable with respect to inspection frequency and target(s) on blade. For example, an end user could choose to inspect any/all turbines every day/month/year according to an operating strategy, and also focus inspections on certain areas of blades to monitor known damages over higher frequency periods to maintain operations until repairs can be made.

One example sequence for automatically monitoring a condition of rotor blades will now be described:
1. Send [blade inspection command] to turbine
2. Turbine pitches all three blades to stop position - brakes not activated yet
3. Turbine yaws to [specify yaw position] and holds this yaw position throughout the rest of the sequence
4. Turbine activates brakes to stop at [specify rotor azimuth position #1] a. Rotor would be positioned such that two blades are pointed downward, and one blade straight up. Blade A is down/right, blade C is down/left, and blade B is pointed up
5. Blade A will be pitched to 85 degrees (stop position) - photograph blade A, suction side
6. Pitch blade A to 0 degrees (run position) - photograph blade A, leading edge
7. Pitch blade A back to 85 degrees
8. Blade C will be pitched to 85 degrees (stop position) - photograph blade C, pressure side
9. Pitch blade C to 0 degrees (run position) - photograph blade C, trailing edge
10. Pitch blade C back to 85 degrees
11. Release brake and position rotor to [specify rotor azimuth position #2] a. Rotor would be positioned such that blade B is down/right, blade A is down/left, and blade C is pointed up
12. Blade B will be pitched to 85 degrees (stop position) - photograph blade B, suction side
13. Pitch blade B to 0 degrees (run position) - photograph blade B, leading edge
14. Pitch blade B back to 85 degrees
15. Blade A will be pitched to 85 degrees (stop position) - photograph blade A, pressure side
16. Pitch blade A to 0 degrees (run position) - photograph blade A, trailing edge
17. Pitch blade A back to 85 degrees
18. Release brake and position rotor to [specify rotor azimuth position #3] a. Rotor would be positioned such that blade C is down/right, blade B is down/left, and blade A is pointed up
19. Blade C will be pitched to 85 degrees (stop position) - photograph blade C, suction side
20. Pitch blade C to 0 degrees (run position) - photograph blade C, leading edge
21. Pitch blade C back to 85 degrees
22. Blade B will be pitched to 85 degrees (stop position) - photograph blade B, pressure side
23. Pitch blade B to 0 degrees (run position) - photograph blade B, trailing edge
24. Pitch blade B back to 85 degrees
25. Sequence complete - turbine resumes operation

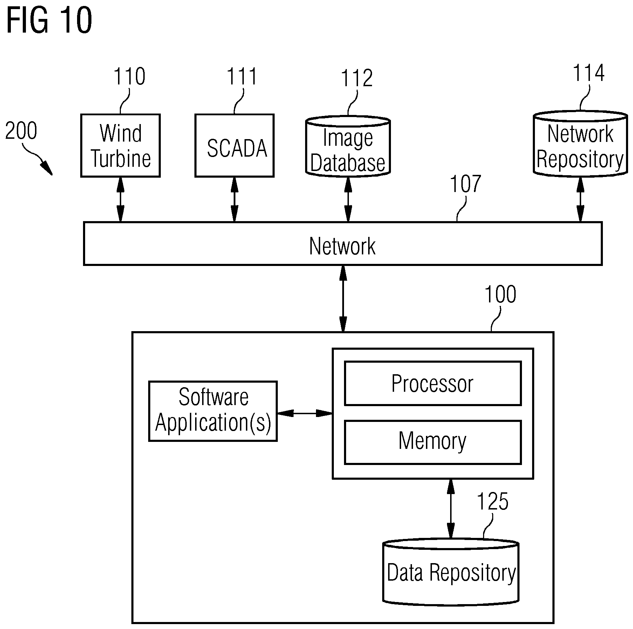

The CMS 100 can be utilized as part of a computer implemented method and system. Figure 10 depicts a block diagram of an automated blade monitoring system 200, in accordance with embodiments of the present invention. The automated blade monitoring system 200 includes a wind turbine 110 (having a computing system), a SCADA 111 (having a computing system), an image database 112, and the computing system (e.g. microcomputer) of the CMS 100 that are communicatively coupled to each other over a network 107. For instance, information/data is transmitted to and/or received from the wind turbine 110, the SCADA 111, and the image database 112 over a network 107. In an exemplary embodiment, the network 107 is a cloud computing network. Further embodiments of network 107 refer to a group of two or more computer systems linked together. Network 107 includes any type of computer network known by individuals skilled in the art. Examples of network 107 include a LAN, WAN, campus area networks (CAN), home area networks (HAN), metropolitan area networks (MAN), an enterprise network, cloud computing network (either physical or virtual) e.g. the Internet, a cellular communication network such as GSM or CDMA network or a mobile communications data network. In one embodiment, the architecture of the network 107 is a peer-to-peer, wherein in another embodiment, the network 107 is organized as a client/server architecture.

Figure 10 depicts a block diagram of the CMS having one or more software applications, a processor, a memory, and a data repository. The wind turbine 110 and the SCADA system may have similar computer architecture.

The image database 112 is a database or other storage device that includes a plurality of image files of rotor blades, damages rotor blades, and the like. Furthermore, the computing system of the CMS 100 is equipped with a memory device which stores various data/information/code, and a processor for implementing the tasks. One or more software applications are loaded in the memory device of the computing system of the CMS 100. The applications can be an interface, an application, a program, a module, or a combination of modules.

The automated method of monitoring damage to rotor blades can be requested remotely from the turbine to the CMS, from the CMS to the turbine, or via SCADA system, for example, over network 107.

In one embodiment, a processor of the computing system of the CMS receives a command to initiate digital imaging of a plurality of rotor blades of the wind turbine and instructs the wind turbine 110 to move the plurality of rotor blades to a first position, wherein in the first position, a first rotor blade is in a field of view of a camera of the condition monitoring system. The CMS captures a digital image of a first surface of the first rotor blade at a first pitch angle and a second surface of the first rotor blade at a second pitch angle, using the camera. In response, the process of the computing system of the CMS instructs the wind turbine to move the plurality of rotor blades to a second position so that a second rotor blade is in the field of view of the camera. Then, the CMS captures a digital image of a first surface of the second rotor blade at a first pitch angle and a second surface of the second rotor blade at a second pitch angle, using the camera of the condition monitoring system.

In another embodiment, a processor of the wind turbine computer/electronics 111, or SCADA 111, receives a command to initiate digital imaging of a plurality of rotor blades of the wind turbine, and moves the plurality of rotor blades to a first position, wherein in the first position, a first rotor blade is in a field of view of a camera of the condition monitoring system, The processor of the wind turbine computer /electronics 111, or SCADA 111 instructs the CMS 100 to capture a digital image of a first surface of the first rotor blade at a first pitch angle and a second surface of the first rotor blade at a second pitch angle. In response, processer initiates the moving of the plurality of rotor blades to a second position so that a second rotor blade is in the field of view of the camera and instructs the condition monitoring system to capture a digital image of a first surface of the second rotor blade at a first pitch angle and a second surface of the second rotor blade at a second pitch angle.

As will be understood by one having ordinary skill in the art based on the foregoing, embodiments of the present invention include a method, a system, or a computer program product. A system of the present invention includes one or more processors, one or more memory devices, and one or more computer readable hardware storage devices. The computer readable hardware storage devices contain computer readable program code executable by the one or more processors via the one or more memory devices to implement the methods or processes described herein. A computer program product includes one or more computer readable hardware storage devices having computer readable program cored stored therein. The computer readable program code contains instructions executable by one or more processors of a computer system to implement the methods and processes described herein.

Any of the components, modules, devices, units, interfaces, steps, etc. of the embodiments of the present invention may be deployed, implemented, managed, or performed through integration into a computing infrastructure for performing the systems and/or methods described herein. Integration into the computing infrastructure may be accomplished by deploying computer readable program code in a computer system, the computer system having one or more processors. The one or more processors may then carry out the instructions contained in the computer readable program code resulting in the computer system performing or providing the systems, methods, and/or processes described herein.

It should be understood that features of the present invention described above with reference to flow charts and/or block diagrams can be implemented by computer readable program code or instructions. The flow charts and/or block diagrams illustrate the functionality or operation of possible implementations or embodiments of methods, systems, and computer program products according to the present invention. As such, each block or step in the flow charts or block diagrams, or combination of steps or blocks, may represent a module, or portion of instructions, executable for implementing the specified functions. The computer readable program code or instructions may be provided to a processor of a computer system or other programmable data processing machine such that the instructions, when executed via the processor, create a means for implementing the functions/aspects specified in the flow charts steps or block diagrams blocks. Each step or block of flow charts or block diagrams may be executed out of the order noted in the Figures. Additionally, each step or block of the flow charts or block diagrams, or combination of steps or blocks, may be carried out by a special purpose computer system that performs the specified functions or acts through special purpose hardware and computer instructions.

While this disclosure has been described in conjunction with the specific embodiments outlined above, it is evident that many alternatives, modifications and variations will be apparent to those skilled in the art. Accordingly, the preferred embodiments of the present disclosure as set forth above are intended to be illustrative, not limiting. Various changes may be made without departing from the spirit and scope of the invention, as required by the following claims. The claims provide the scope of the coverage of the invention and should not be limited to the specific examples provided herein.

## Claims

1. A blade inspection device comprising:
- a housing (12) configured to be attached to a tower (4) of a wind turbine (1);
- a camera disposed within the housing (12), the camera (13) configured to capture digital images of a plurality of rotor blades (5) of the wind turbine (1) at various positions for monitoring a condition of the plurality of rotor blades (5); and
- a camera holder (11) holding the camera (13) within the housing (12), the camera holder (11) constructed to allow movement of the camera (13) in at least two axes.

2. The blade inspection device of claim 1, wherein at least a top surface of the housing (12) is comprised of a transparent material, and the entire housing (12) is waterproof,
the waterproof housing (12) is preferably being attached at least or attachable to a surface of the tower (4) with magnets, preferably wherein the waterproof housing (12) includes a metal frame (12a) and a transparent roof surface.

3. The blade inspection device according to one of the preceding claims, further comprising a thermostat (16) for controlling a temperature of an environment inside the housing (12), and/or a dehumidifier for controlling a moisture level of the environment inside the housing (12), and/or a fan (15) for circulating air within the environment inside the housing (12) .

4. The blade inspection device according to one of the preceding claims, further comprising a microcomputer (14) coupled to the camera (13), the microcomputer (14) including an integrated circuit having an embedded processor, a wireless network interface, a power source, and a memory system, wherein the microcomputer (14) preferably communicates over a network (107) with a remote computer that controls the wind turbine (1).

5. The blade inspection device according to one of the preceding claims, wherein the camera (13) is capable of panning across at least 106 degrees of viewing angle to view the plurality of rotor blades (5).

6. The blade inspection device according to one of the preceding claims, wherein the camera (13) is vertically oriented within the housing (12) to face upwards and capture digital images of the plurality of rotor blades (5).

7. The blade inspection device according to one of the preceding claims, further comprising an attachment means (17) located on at least one side wall of the housing (12) for mounting the housing (12) to the tower (4) of the wind turbine (1),
wherein the housing (12) is preferably attached to a lower section of the tower (4).

8. A method of monitoring rotor blades (5) of a wind turbine (1), comprising:
- rotating a rotor (2) of the wind turbine (1) so that each surface of the rotor blades (5) are temporarily in the field of view of a camera (13) of a condition monitoring system (100) attached to a tower (4) of the wind turbine (1); and
- photographing each surface of the rotor blades (5) using the camera (13) of the condition monitoring system (100).

9. The method of claim 8, further comprising: automatically identifying and categorizing damages to the rotor blades (5) based on images captured by the camera (13) of the condition monitoring system (100),
preferably wherein the automatically identify and categorizing damages includes comparing the images captured by the camera (13) with a plurality of images stored on a central database (112).

10. The method of one of claims 8 or 9, wherein photographing each surface of the rotor blades (5) includes capturing digital images of a pressure side, a suction side, a leading edge, and a trailing edge of the rotor blades (5).

11. The method of claim 10, wherein photographing each surface of the rotor blades (5) includes manipulating the camera (13) in different positions to alter the field of view of the camera (13) to encompass a specific surface of the rotor blades (5)
and/or
wherein rotating the rotor (2) of the wind turbine (1) so that each surface of the rotor blades (5) are temporarily in the field of view of the camera (13) includes pitching each rotor blade (5) at at least two different pitch angles while the rotor (2) is in a stopped position.

12. A method, preferably according to one of claims 8 to 11, for monitoring rotor blades (5) of a wind turbine (1), the method comprising:
- receiving a command to initiate digital imaging of a plurality of rotor blades (5) of the wind turbine (1);
- moving the plurality of rotor blades (5) to a first position, wherein in the first position, a first rotor blade (5) is in a field of view of a camera (13) of the condition monitoring system (100);
- capturing a digital image of a first surface of the first rotor blade (5) at a first pitch angle and a second surface of the first rotor blade (5) at a second pitch angle,
- in response to capturing the digital image of the first surface and the second surface of the first rotor blade (5), moving the plurality of rotor blades (5) to a second position so that a second rotor blade (5) is in the field of view of the camera (13); and
- capturing a digital image of a first surface of the second rotor blade (5) at a first pitch angle and a second surface of the second rotor blade (5) at a second pitch angle.

13. The method of claim 12, further comprising: transmitting, by the processor, the first digital image and the second digital image to a remote computer for analysis and comparison with a plurality of digital images in a central database (112) .

14. A computer system comprising:
- a processor;
- a memory device coupled to the processor; and
- a computer readable storage device coupled to the processor, wherein the storage device contains program code executable by the processor via the memory device to implement the method of one of claims 11 to 13.

15. A computer program product, comprising a computer readable hardware storage device storing a computer readable program code, the computer readable program code comprising an algorithm that when executed by a computer processor of a computing system implements a method of one of claims 11 to 13.
